Europäisches Patentamt

European Patent Office

Office européen des brevets

(11) Numéro de publication: **0 289 399**
**A2**

## DEMANDE DE BREVET EUROPEEN

(21) Numéro de dépôt: 88400970.5

(22) Date de dépôt: **21.04.88**

(51) Int. Cl.⁴: **F 16 D 65/84**
F 16 D 65/16

(30) Priorité: 30.04.87 FR 8706164

(43) Date de publication de la demande:
**02.11.88 Bulletin 88/44**

(84) Etats contractants désignés: **DE ES FR GB IT**

(71) Demandeur: **BENDIX France Société Anonyme dite:**
**126, rue de Stalingrad**
**F-93700 Drancy (FR)**

(72) Inventeur: **Carre, Jean-Jacques**
**5 Boulevard de l'Est**
**F-93340 Le Raincy (FR)**

**Fargier, Eric**
**13, avenue du Maréchal Foch**
**F-93360 Neuilly-Plaisance (FR)**

(74) Mandataire: **Timoney, Ian Charles Craig et al**
**Division Technique Service Brevets Bendix Europe 126,**
**rue de Stalingrad**
**F-93700 Drancy (FR)**

(54) **Frein à disque à échauffement limité du liquide de frein.**

(57) Pour éviter l'échauffement excessif du liquide de frein dans les chambres de commande (20a, 20b), un matériau (34) de protection thermique de ce liquide est placé, par exemple, dans chacun des pistons de frein (16a, 16b). Ce matériau (34) peut notamment avoir une température de fusion au plus égale à une température maximale admissible du liquide de frein, la transformation solide-liquide étant endothermique. Ce matériau peut aussi constituer un écran thermique revêtant la surface intérieure de chaque piston. Enfin, il peut s'agir d'un écran thermique revêtant les parties de la surface intérieure de l'étrier tournées vers le disque et vers les patins.

FIG. 1

**Description**

## FREIN A DISQUE A ECHAUFFEMENT LIMITE DU LIQUIDE DE FREIN.

L'invention concerne un frein a disque conçu de façon à éviter un échauffement excessif du liquide de frein.

Lorsqu'un frein à disque est actionné de façon répétée, par exemple lors de la descente d'un col, les températures du disque et des garnitures de friction s'élèvent rapidement pour atteindre des valeurs limites qui sont respectivement d'environ 700°C et environ 500°C en surface. A cette augmentation de température du disque et des garnitures de friction correspond une augmentation de la température des pistons et du liquide de frein. Cette augmentation de température est toutefois très inférieure et tend à se stabiliser dans le temps, notamment sous l'effet de l'écoulement de l'air dû au déplacement du véhicule.

Lorsqu'on arrête le véhicule après une telle période de freinage, la température du disque et des garnitures de friction décroît rapidement. Cette décroissance rapide s'explique par le rayonnement de la chaleur dans les éléments environnants du frein, c'est-à-dire notamment dans les pistons et dans le liquide de frein. La température de ces différents éléments continue donc à augmenter après l'arrêt du véhicule.

Si cet accroîssement de température est sans conséquence pour les pistons, elle peut être dangereuse en ce qui concerne le liquide de frein. En effet, l'élévation de température du liquide de frein au-dessus d'une température limite généralement voisine de 160°C peut entraîner l'apparition d'un phénomène dit de "vapor lock". Ce phénomène se caractérise par la formation de bulles de vapeur ou de gaz dans le liquide de frein, conduisant à rendre ce liquide compressible et, par conséquent, à une perte d'efficacité du frein.

Dans le document FR-A-2 496 805, il est décrit un frein à disque dans lequel la transmission directe aux pistons de frein de la chaleur engendrée dans le disque et dans les garnitures lors du freinage est empêchée en interposant entre chaque piston et le patin de frein sur lequel il est en appui un élément formant écran thermique, réalisé par exemple en une matière céramique.

L'utilisation de tels éléments est effectivement souhaitable, car elle permet d'éviter la formation de ponts thermiques entre les patins de frein et les pistons. Cependant, ces éléments n'empêchent pas la transmission de la chaleur aux pistons, puis au liquide de frein par rayonnement, notamment à partir du disque.

La présente invention a précisément pour objet un perfectionnement au frein à disque décrit dans le document FR-A-2 496 805, permettant d'améliorer la protection thermique du liquide de frein vis-à-vis du disque et des patins, notamment sous l'effet de la chaleur transmise aux pistons par rayonnement, puis par conduction thermique au travers du corps du frein.

Selon l'invention, ce résultat est obtenu au moyen d'un frein à disque comprenant un disque tournant, un étrier chevauchant le disque et supportant des patins de frein de part et d'autre de ce dernier, et au moins un cylindre de frein formé dans l'étrier et dans lequel est reçu en coulissement un piston de frein délimitant avec le cylindre une chambre de commande remplie de liquide de frein, ledit piston étant en appui sur l'un des patins de frein par l'intermédiaire d'un élément formant écran thermique, caractérisé en ce qu'au moins un matériau de protection thermique du liquide de frein est également interposé entre le disque et les patins de frein d'une part et la chambre de commande de chaque piston de frein d'autre part.

Conformément un premier mode de réalisation de l'invention, chaque piston est creux, obturé par ledit élément formant écran thermique, et contient un corps qui a une température de fusion au plus égale à une température maximale admissible du liquide de frein, la fusion de ce corps, qui constitue ledit matériau de protection thermique, étant endothermique.

Le corps contenu dans le piston creux peut notamment être un polyacétate granulé dont la température de fusion est d'environ 160°C.

Pour faciliter l'échange thermique entre le liquide de frein et le corps contenu dans le piston, ce dernier comporte de préférence une paroi adjacente à la chambre de commande, pourvue d'une surface intérieure nervurée.

Conformément à un deuxième mode de réalisation de l'invention, chaque piston est creux et revêtu intérieurement d'un écran thermique constituant ledit matériau de protection thermique.

Selon un troisième mode de réalisation de l'invention, qui peut être combiné avec l'un ou l'autre des deux modes de réalisation précédents, le matériau de protection thermique comprend un écran thermique qui recouvre les surfaces extérieures de l'étrier tournées vers le disque et les patins.

De préférence, dans les deuxième et troisième modes de réalisation de l'invention, l'écran thermique est un revêtement de polytétrafluoréthylène.

Différents modes de réalisation de l'invention vont maintenant être décrits, à titre d'exemples nullement limitatifs, en se référant aux dessins annexés dans lesquels :

    - la figure 1 est une vue de côté et en coupe représentant un premier mode de réalisation d'un frein à disque conforme à l'invention,

    - la figure 2 est une vue comparable à la figure 1 représentant un deuxième mode de réalisation d'un frein à disque selon l'invention,

    - la figure 3 est une vue comparable aux figures 1 et 2 illustrant un troisième mode de réalisation de l'invention, et

    - la figure 4 est une vue de face, en demi-coupe, du frein à disque de la figure 3.

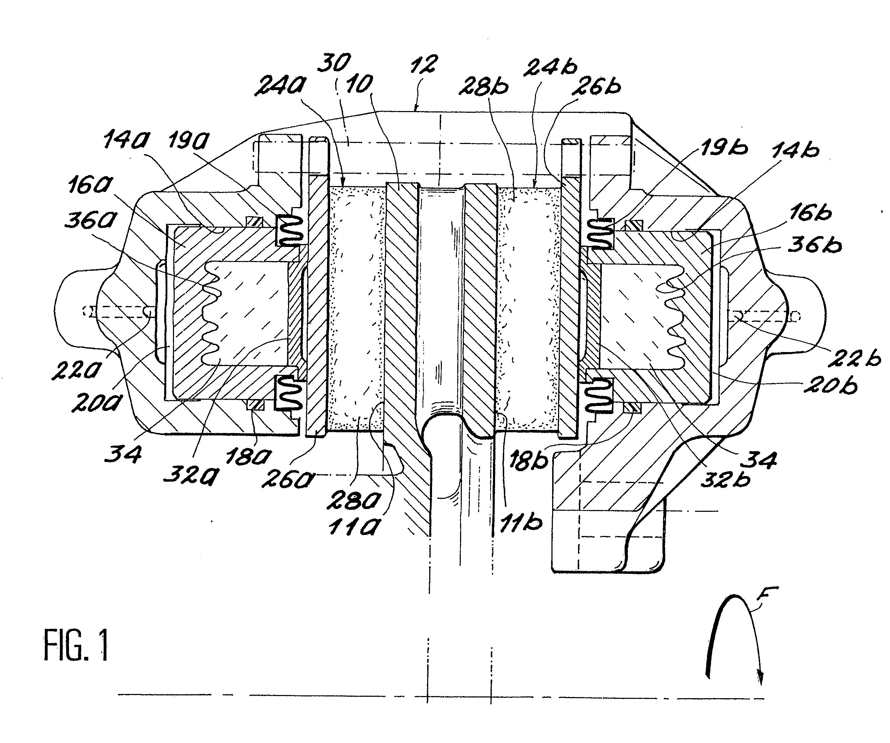

Le frein à disque représenté sur la figure 1 comprend un disque de frein 10 fixé sur une partie tournante telle qu'une roue du véhicule. Le disque 10 est donc animé d'un mouvement de rotation (flèche F) lorsque le véhicule est en mouvement.

Le frein à disque de la figure 1 comprend de plus un étrier 12 fixé, par exemple par des boulons (non représentés), sur une partie non tournante proche de la roue portant le disque 10. Cette partie non tournante peut notamment être une fusée d'essieu. L'étrier 12 chevauche le disque 10 et comprend de part et d'autre de ce dernier, au moins un cylindre de frein 14a, 14b d'axe parallèle à l'axe du disque. Chaque cylindre est ouvert du côté de la face correspondante 11a, 11b du disque 10.

A l'intérieur de chacun des cylindres de frein 14a, 14b est reçu en coulissement de façon étanche un piston de frein 16a, 16b. L'étanchéité du coulissement est assurée par un joint d'étanchéité annulaire 18a, 18b monté dans une gorge formée à l'intérieur du cylindre 14a, 14b correspondant, à proximité de l'extrémité ouverte de ce cylindre. Généralement, la forme du joint 18a, 18b permet de rappeler le piston correspondant 16a, 16b en éloignement du disque 10, après chaque action de freinage.

Un soufflet d'étanchéité 19a, 19b est interposé entre l'extrémité ouverte de chaque cylindre 14a, 14b et l'extrémité correspondante du piston 16a, 16b, afin de protéger les espaces cylindre-piston vis-à-vis des poussières extérieures.

Chacun des pistons 16a, 16b est creux et comprend une paroi de fond adjacente au fond du cylindre correspondant 14a, 14b et une paroi cylindrique par laquelle il coulisse dans ce cylindre. Ainsi, une chambre de commande 20a, 20b est délimitée entre la paroi de fond de chaque piston 16a, 16b et le fond du cylindre 14a, 14b. Chacune de ces chambres 20a, 20b communique par un passage 22a, 22b avec le circuit de freinage du véhicule (non représenté). Comme l'ensemble du circuit de freinage, ces chambres 20 sont donc remplies de liquide de frein.

Par ailleurs, l'étrier 12 supporte de part et d'autre du disque 10 deux patins de frein 24a, 24b constitués chacun d'une plaque porte-garniture 26a, 26b et d'une garniture de friction 28a, 28b supportée par la plaque porte-garniture. Le supportage des patins 24a, 24b peut notamment être assuré par deux broches orientées parallèlement à l'axe de rotation du disque et dont l'une est représentée schématiquement en traits mixtes et désignée par la référence 30 sur la figure 1. Chacune des broches 30 traverse des perçages formés dans l'étrier 12 de part et d'autre du disque et des perçages formés dans les plaques porte-garniture des patins de frein et passe au-delà du bord périphérique extérieur du disque 10. La reprise des efforts de freinage est de préférence assurée par des surfaces d'appui (non représentées) formées sur l'étrier 12.

De façon habituelle et comme l'illustre la figure 1, chacun des patins de frein 24a, 24b est interposé entre l'une des faces 11a, 11b du disque 10 et le ou les pistons 16a, 16b situés du côté de cette face.

Chacun des pistons 16a, 16b est en appui sur la plaque porte-garniture 26a, 26b du patin correspondant par l'intermédiaire d'un élément 32a, 32b formant écran thermique, cet élément se présentant sous la forme d'un bouchon emboîté et fixé par tout moyen connu approprié dans l'extrémité ouverte du piston de frein 16a, 16b correspondant. Ces bouchons 32a, 32b peuvent notamment être réalisés en une matière céramique ou phénolique. Ils permettent d'éviter les ponts thermiques entre les patins 24a, 24b et les pistons 16a, 16b.

Dans le mode de réalisation de la figure 1, le volume délimité à l'intérieur de chaque piston creux 16a, 16b fermé par son bouchon 32a, 32b contient un corps 34 qui se présente à l'état solide, par exemple, sous forme de granulé, à température ambiante. Ce corps 34 est choisi de telle sorte que sa température de fusion soit légèrement inférieure à la température maximale acceptable pour le liquide de frein contenu dans les chambres de commande 20a, 20b. Dans la pratique, cette température maximale admissible est d'environ 160°C, de sorte que la température de fusion du corps 34 est de préférence comprise entre environ 150°C et environ 160°C.

Par ailleurs, le corps 34, placé à l'intérieur des pistons 16a, 16b, est également choisi de telle sorte que sa transformation de l'état solide à l'état liquide se fasse de manière endothermique, c'est-à-dire en absorbant une certaine quantité de chaleur.

A titre d'exemple nullement limitatif, ce corps 34 peut être un polyacétate granulé tel que celui qui est commercialisé sous la marque HOSTAFORM C 9021. La température de fusion de ce corps est d'environ 160°C et sa fusion s'effectue de manière endothermique.

De préférence et comme l'illustre également la figure 1, la surface intérieure de la paroi de fond de chacun des pistons 16a, 16b adjacente à la chambre de commande 20a, 20b contenant le liquide de frein est pourvue de nervures 36a, 36b. Ces nervures facilitent l'échange thermique entre le corps 34 contenu dans chaque piston 16a, 16b et le liquide de frein contenu dans les chambres 20a, 20b, en augmentant la surface d'échange. Le mot "nervures" doit donc être pris ici dans un sens très large englobant toutes les formes permettant d'accroître de façon sensible la surface intérieure de la paroi de fond de chacun des pistons.

Lorsque le conducteur du véhicule actionne la pédale de frein, la pression du liquide de frein contenue dans chacune des chambres de commande 20a, 20b s'élève, ce qui a pour effet de déplacer les pistons 16a, 16b vers le disque 10. Les garnitures de friction 28a, 28b viennent ainsi en contact avec les faces correspondantes 11a, 11b du disque, pour en ralentir ou en stopper la rotation. Ce contact entre les garnitures 28 et le disque 10 conduit à un échauffement d'autant plus important que le nombre d'applications du frein est élevé, comme c'est notamment le cas lors d'une longue descente en montagne. La température du disque peut alors atteindre environ 700°C, alors que les garnitures s'élèvent à une température de surface voisine de 500°C.

Dans le même temps, l'étrier, les pistons et le liquide de frein s'échauffent également à des températures sensiblement moindres, notamment sous l'effet réfrigérant de l'écoulement de l'air dû au déplacement du véhicule. les éléments 32a, 32b formant écran thermique contribuent en outre à éviter qu'une quantité trop importante de chaleur ne soit transmise aux pistons par les porte-garniture des patins.

Cependant, lorsque le véhicule s'arrête après avoir subi des freinages répétés au cours d'une longue descente, la chaleur emmagasinée dans le disque et dans les garnitures s'abaisse relativement rapidement notamment par rayonnement dans l'air et dans les éléments environnants du frein. En l'absence des dispositions particulières de l'invention, ce rayonnement a habituellement pour effet une poursuite de la montée en température de l'étrier, du piston et du liquide de frein. Il en résulte un risque important pour ce dernier d'apparition d'un phénomène de "vapor lock".

Dans le mode de réalisation de la figure 1, ce risque est supprimé grâce à la présence du corps 34 à l'intérieur de chacun des pistons 16a, 16b. En effet, lorsque la température des pistons, qui est généralement supérieure à la température du liquide de frein, atteint la température de fusion du corps 34, ce corps passe progressivement à l'état liquide en absorbant de la chaleur au fur et à mesure de sa transformation. Etant donné que la température de fusion du corps 34 est au plus égale à la température maximale admissible pour le liquide de frein, on limite ainsi l'augmentation de température de ce liquide une valeur pour laquelle le phénomène de "vapor lock" ne risque pas de se produire.

Lorsque la température de l'étrier, des pistons et du liquide de frein recommence à descendre, le corps 34 passe à nouveau à l'état solide. La transformation correspondante s'accompagne cette fois d'un dégagement de chaleur, de sorte que le temps de retour à la température ambiante du frein est légèrement augmentée. Cependant, ce phénomène n'est pas préjudiciable à un bon fonctionnement du frein.

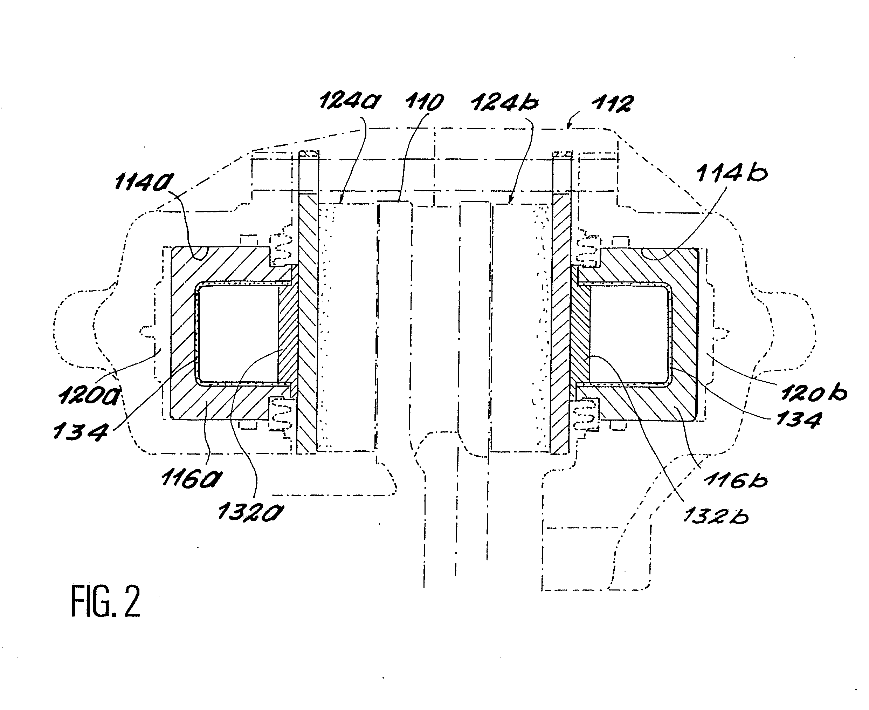

La figure 2 représente un deuxième mode de réalisation de l'invention, dans lequel la protection thermique du liquide de frein contenu dans les chambres de commande est assurée de façon différente.

Pour l'essentiel, le frein à disque de la figure 2 est identique à celui qui a été décrit précédemment en se référant à la figure 1. Aucune description détaillée de ce frein ne sera donc faite ici. Pour clarifier l'exposé, les éléments du frein de la figure 2 qui correspondent à certains éléments du frein de la figure 1 sont désignés par les mêmes chiffres de référence augmentés de 100.

Le frein disque représenté sur la figure 2 comprend également un disque tournant 110 que chevauche un étrier fixe 112. De part et d'autre du disque 110, l'étrier 112 comprend un cylindre 114a, 114b dans lequel peut coulisser de façon étanche un piston de frein 116a, 116b servant à appliquer un patin de frein 124a, 124b sur la face correspondante du disque.

Comme dans le mode de réalisation de la figure 1, un élément 132a, 132b formant écran thermique est interposé entre chaque piston 116a, 116b et le patin de frein 124a, 124b correspondant. Chacun des éléments 132a, 132b a la forme d'un bouchon emboîté et fixé dans l'extrémité ouverte du piston 116a, 116b correspondant.

Le mode de réalisation de la figure 2 se distingue du mode de réalisation de la figure 1 par le fait que le matériau 34 est supprimé et que la surface intérieure de chacun des pistons creux 116a, 116b est revêtue par exemple par projection, d'un écran thermique 134 réalisé par exemple en polytétrafluoroéthylène.

Cette couche 134 constitue une barrière thermique dont le role est d'éviter que la chaleur transmise par rayonnement, notamment à partir des garnitures des patins 124a, 124b lors du refroidissement de celles-ci après des freinages répétés, ne soit transmise intégralement au liquide de frein contenu dans les chambres de commande 120a, 120b délimitées dans les cylindres 114a, 114b à l'arrière des pistons 116a, 116b.

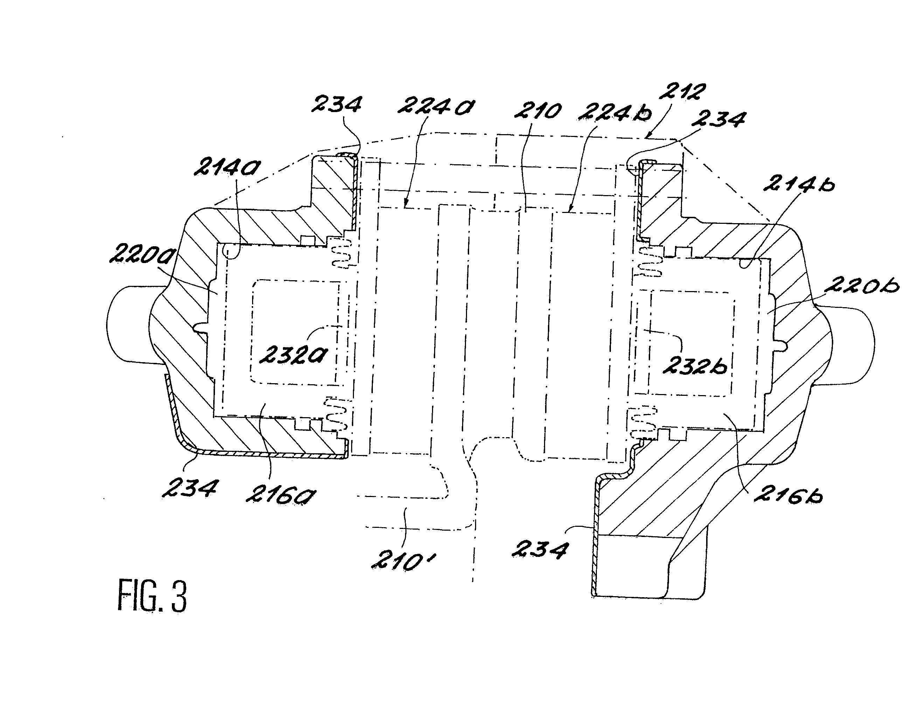

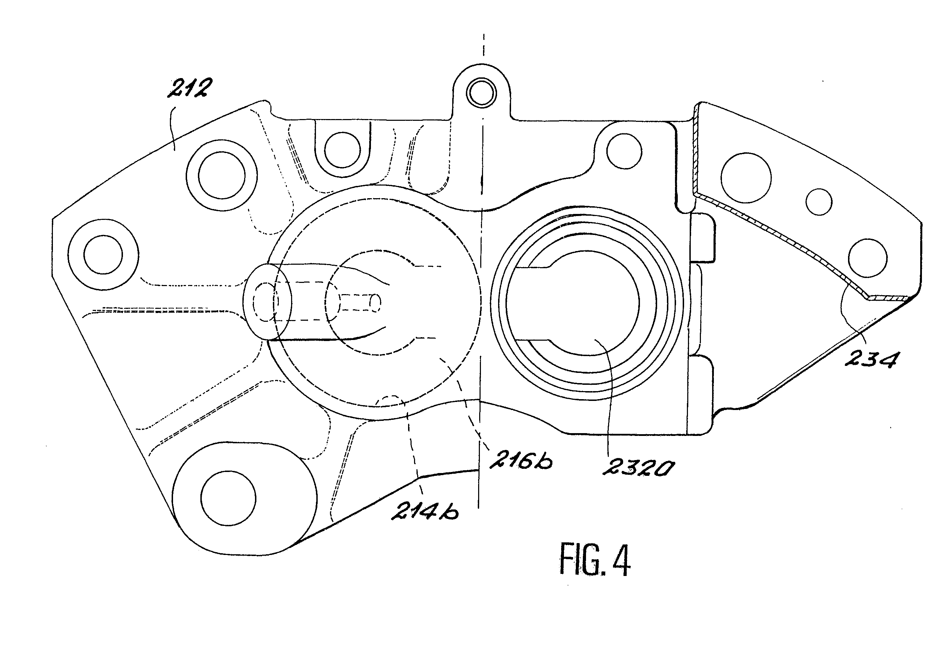

Les figures 3 et 4 illustrent un troisième mode de réalisation de l'invention qui peut être soit totalement distinct des deux précédents, soit combiné avec ceux-ci. Dans son ensemble, le frein à disque des figures 3 et 4 est comparable au frein à disque décrit en détail en se référant à la figure 1. Les éléments du frein des figures 3 et 4 qui correspondent aux éléments du frein précédemment décrit en se référant à la figure 1 sont désignés pour simplifier par les mêmes chiffres de référence augmentés de 200.

Le frein a disque des figures 3 et 4 comprend comme précédemment un disque tournant 210 que chevauche un étrier fixe 212 supportant de part et d'autre du disque deux patins de frein 224a, 224b. L'étrier 212 comporte de chaque côté du disque 210 deux cylindres 214a, 214b dans lesquels coulissent de façon étanche des pistons 216a, 216b. Un élément de protection thermique 232a, 232b obturant chacun des pistons 216a, 216b est interposé entre ces derniers et le patin 224a, 224b correspondant.

Les pistons 216a, 216b peuvent être réalisés soit de façon classique soit, de préférence, de l'une ou l'autre des manières décrites précédemment en se référant aux figures 1 et 2.

Dans le mode de réalisation des figures 3 et 4, la protection du liquide de frein contenu dans les chambres de commande 220a, 220b vis-à-vis de la chaleur diffusée par rayonnement à partir du disque 210 et des patins 224 est assurée par un écran thermique 234 qui recouvre les surfaces extérieures de l'étrier 212 tournées vers le disque et vers les patins.

Ainsi, l'écran thermique 234 recouvre les surfaces de l'étrier 212 tournées vers l'intérieur du frein, c'est-à-dire aussi bien les surfaces de l'étrier 212 situées de part et d'autre du disque 210 et tournées vers celui-ci (figure 3), que les surfaces des deux parties en forme de voûte de l'étrier 212 qui chevauchent le disque et sont tournées vers celui-ci (figure 4).

De plus, le disque 210 étant relié à la roue par un fût 210' situé en partie sous les cylindres 214 de gauche en considérant la figure 3, l'écran thermique 234 recouvre également la partie de ces cylindres tournée vers le fût du disque 210.

Comme dans le cas de la couche 134 décrite précédemment en se référant à la figure 2, l'écran thermique 234 qui vient d'être décrit en se référant aux figures 3 et 4 est constitué par exemple par du polytétrafluoréthylène déposé par projection sur les surfaces de l'étrier à protéger.

L'écran thermique 234 qui vient d'être décrit empêche la transmission par rayonnement de la chaleur émise par le disque et par les garnitures des patins au liquide de frein contenu dans les chambres de commande 220a, 220b. Une élévation de température excessive de ce liquide est donc évitée.

Bien entendu, l'invention n'est pas limitée aux modes de réalisation qui viennent d'être décrits à titre d'exemples, mais en couvre toutes les variantes. En particulier, bien que tous les modes de réalisation décrits concernent un frein à disque à étrier fixe, l'invention s'applique également à un frein à disque à étrier coulissant, dans lequel l'étrier comprend un ou plusieurs cylindres de frein d'un seul côté du disque, l'application du patin de frein situé de l'autre côté du disque contre la face correspondante de ce dernier s'effectuant sous l'effet d'un déplacement de l'étrier par rapport à un support fixe. Dans ce cas, lorsque le frein comprend un écran thermique recouvrant une partie de la surface extérieure de l'étrier, cet écran peut n'être prévu que du coté de l'étrier portant le ou les cylindres de frein.

Par ailleurs, dans le cas d'un frein à disque à étrier fixe, les chambres de commande situées de part et d'autre du disque sont reliées entre elles par au moins un canal de transfert du liquide de frein. Pour protéger le liquide de frein qui se trouve dans chaque canal, vis-à-vis des radiations du disque, compte tenu de la très faible épaisseur de matière existant entre chaque canal et le disque dans la zone de l'étrier surplombant ce dernier (environ 3 mm), un tuyau en un matériau à très faible conductibilité thermique peut être placé dans chaque canal. Ce matériau, qui doit en outre résister à des températures élevées, peut être notamment de la céramique ou du polytétrafluoréthylène.

**Revendications**

1. Frein à disque comprenant un disque tournant (10, 110, 210) un étrier (12, 112, 212) chevauchant le disque et supportant des patins de frein (24a, 24b ; 124a, 124b ; 224a, 224b) de part et d'autre de ce dernier, et au moins un cylindre de frein (14a, 14b ; 114a, 114b ; 214a, 214b) formé dans l'étrier et dans lequel est reçu en coulissement un piston de frein (16a, 16b ; 116a, 116b ; 216a, 216b) délimitant avec le cylindre une chambre de commande (20a, 20b ; 120a, 120b ; 220a, 220b) remplie de liquide de frein, ledit piston étant en appui sur l'un des patins de frein par l'intermédiaire d'un élément (32a, 32b ; 132a, 132b ; 232a, 232b) formant écran thermique, caractérisé en ce qu'au moins un matériau (34, 134, 234) de protection thermique du liquide de frein est également interposé entre le disque (10, 110, 210) et les patins de frein (24a, 24b ; 124a, 124b ; 224a, 224b) d'une part et la chambre de commande (20a, 20b ; 120a, 120b ; 220a, 220b) de chaque piston de frein d'autre part.

2. Frein à disque selon la revendication 1, caractérisé en ce que chaque piston (16a, 16b) est creux, obturé par ledit élément (32a, 32b) formant écran thermique, et contient un corps (34) qui a une température de fusion au plus égale une température maximale admissible du liquide de frein, la fusion de ce corps, qui constitue ledit matériau de protection thermique, étant endothermique.

3. Frein à disque selon la revendication 2, caractérisé en ce que ledit corps (34) est un polyacétate granulé dont la température de fusion est d'environ 160°C.

4. Frein à disque selon l'une quelconque des revendications 2 et 3, caractérisé en ce que le piston creux (16a, 16b) comporte une paroi adjacente à la chambre de commande (20a, 20b) pourvue d'une surface intérieure nervurée (36a, 36b).

5. Frein à disque selon la revendication 1, caractérisé en ce que chaque piston (116a, 116b) est creux et revêtu intérieurement d'un écran thermique (134) constituant ledit matériau de protection thermique.

6. Frein à disque selon l'une quelconque des revendications 1 à 5, caractérisé en ce que le matériau de protection thermique comprend un écran thermique (234) qui recouvre les surfaces extérieures de l'étrier (212) tournées vers le disque (210) et les patins (224a, 224b).

7. Frein à disque selon l'une quelconque des revendications 5 et 6, caractérisé en ce que ledit écran thermique (134, 234) est un revêtement de polytétrafluoréthylène.

8. Frein à disque selon l'une quelconque des revendications 1 à 7, caractérisé en ce qu'il comprend au moins deux chambres de commande (20a, 20b) situées de part et d'autre du disque et reliées par au moins un canal de transfert dans lequel est placé un tuyau formant écran thermique.

FIG. 1

0289399

FIG. 2

124a  110  124b  112
114a
114b
120a
134
116a
132a
116b
132b
120b
134

0289399

FIG. 3

234  224a  210  224b  212  234
214a
220a
214b
220b
232a  232b
234  216a
216b
210'
234

0289399

FIG. 4